**Europäisches Patentamt**

**European Patent Office**

**Office européen des brevets**

(11) Veröffentlichungsnummer: **0 297 174**
**A2**

# EUROPÄISCHE PATENTANMELDUNG

(21) Anmeldenummer: **87117451.2**

(22) Anmeldetag: **26.11.87**

(51) Int. Cl.4: **F16F 13/00 , F16F 9/46**

(30) Priorität: **02.07.87 DE 3721811**

(43) Veröffentlichungstag der Anmeldung:
**04.01.89 Patentblatt 89/01**

(84) Benannte Vertragsstaaten:
**DE FR GB IT**

(71) Anmelder: **Firma Carl Freudenberg**
**Höhnerweg 2-4**
**D-6940 Weinheim/Bergstrasse(DE)**

(72) Erfinder: **Ticks, Gerd-Heinz**
**Am Wetzel 10**
**D-6948 Waldmichelbach(DE)**
Erfinder: **Winkler, Gerold**
**Reisener Strasse 11**
**D-6943 Birkenau(DE)**

(74) Vertreter: **Weissenfeld-Richters, Helga, Dr.**
**Höhnerweg 2-4**
**D-6940 Weinheim/Bergstrasse(DE)**

(54) **Motorlager.**

(57) Ein Motorlager mit hydraulischer Dämpfung, bei dem zwischen zwei flüssigkeitsgefüllten Räumen eine Trennwand angeordnet ist. Die Trennwand ist von einer Drosselöffnung durchdrungen und enthält eine den Arbeitsraum begrenzende Kompensationswand, die parallel zur Richtung der eingeleiteten Schwingungen zwischen Anschlägen beweglich ist. Des weiteren ist in dem Arbeitsraum eine der Kompensationswand vorgelagerte Lochblende (3) enthalten, deren Öffnungsweite zwischen einem Kleinstmaß D min und einem Größtmaß D max verstellbar ist mittels einer signalbetätigbaren Verstelleinrichtung (4). Letztere ist signalleitend mit einem Drehzahlaufnehmer (2) des Motors verbunden, welcher ein drehzahlproportionales Signal abgibt.

Fig. 3

## Motorlager

Die Erfindung betrifft ein Motorlager mit hydraulischer Dämpfung, enthaltend einen durch ein Auflager, eine Tragfeder, ein Traglager und eine Trennwand begrenzten Arbeitsraum und einen durch die Trennwand und eine nachgiebige Pufferwand begrenzten Ausgleichsraum, die durch eine Drosselöffnung verbunden und mit Flüssigkeit gefüllt sind, wobei die Trennwand in wenigstens einem Teilbereich eine parallel zur Richtung der eingeleiteten Schwingungen zwischen Anschlägen bewegliche Kompensationswand umfaßt und eine Lochblende zwischen der Kompensationswand und dem Arbeitsraum.

Ein Motorlager der vorgenannten Art ist aus der EP-A 0147242 bekannt. Es bewirkt eine gute Dämpfung fahrbahnerregter Schwingungen unterhalb von 20 Hz sowie eine relativ gute Isolierung von motorerregten Schwingungen oberhalb von 100 Hz. Im Zwischenbereich liegende, motorerregte Schwingungen werden indessen noch nicht in befriedigendem Maße isoliert. Sie können unerwünschte Dröhngeräusche im Inneren des mit einem solchen Motorlager ausgestatteten Kraftfahrzeuges verursachen.

Der Erfindung liegt die Aufgabe zugrunde, ein solches Motorlager derart weiterzuentwickeln, daß sich im gesamten Bereich motorregter Schwingungen eine wesentlich verbesserte Isolierung derselben ergibt.

Diese Aufgabe wird erfindungsgemäß dadurch gelöst, daß der Motor mit einem Drehzahlaufnehmer zur Erzeugung eines Drehzahlproportionalsignals versehen ist, das die Lochblende mit einer signalbetätigbaren Verstelleinrichtung zur signalproportionalen Veränderung der Öffnungsweite der Lochblende zwischen einem Kleinstmaß (D min) und einem Größtmaß (D max) versehen ist und daß der Drehzahlaufnehmer und die Verstelleinrichtung signalleitend verbunden sind.

Das erfindungsgemäße Motorlager ist ein aktiv angesteuertes Motorlager, bei dem die Lochblende proportional zur jeweiligen Motordrehzahl eine sich ändernde Öffnungsweite aufweist. Die beiden benötigten Grenzwerte D min und D max werden im Versuch ermittelt, indem einerseits bei Einstellung der niedrigsten Betriebsdrehzahl des Motors und andererseits bei Höchstdrehzahl des Motors die Öffnungsweite der Lochblende jeweils so verstellt wird, daß sich die bestmöglich erreichbaren Isoliereigenschaften ergeben. Diese kennzeichnen zugleich die geringstmögliche dynamische Verhärtung. Sind die erhaltenen Werte einmal festgelegt, so können sie fest eingestellt werden als Grenzwerte, zwischen denen parallel zur ansteigenden bzw. sinkenden Betriebsdrehzahl eine kontinuierliche Veränderung der Öffnungsweite der Lochblende vorgenommen wird. Zweckmäßig erfolgt diese mit Hilfe eines Servoantriebes. Eine unmittelbare Kupplung ist ebenfalls möglich, erfordert jedoch in den meisten Fällen einen relativ vergrößerten Herstellaufwand. Für das grundsätzliche Funktionsprinzip ist das indessen ohne weitere Bedeutung.

Die Lochblende kann als Irisblende ausgebildet sein. Für die Verstellung genügen in diesem Falle geringe Antriebskräfte, was die Verwendung vereinfacht. Auch ist die mechanische Widerstandsfähigkeit ausreichend in Hinblick auf die normale Gebrauchsdauer eines Kraftfahrzeuges.

Der Gegenstand der vorliegenden Erfindung wird nachfolgend anhand der als Anlage beigefügten Zeichnung weiter erläutert. Es zeigen:

Figur 1 die prinzipielle Anbringung des erfindungsgemäßen Motorlagers im Bereich der Abstützung eines Verbrennungsmotors einschließlich der notwendigen Anschlüsse.

Figur 2 ein Diagramm, in welchem die dynamische Federsteifigkeit des Motorlagers über der Frequenz aufgetragen ist.

Figur 3 eine Ausführung des erfindungsgemäßen Motorlagers in längsgeschnittener Darstellung.

Figur 4 ein Ausführungsbeispiel für eine in dem erfindungsgemäßen Motorlager zur Anwendung gelangende Lochblende.

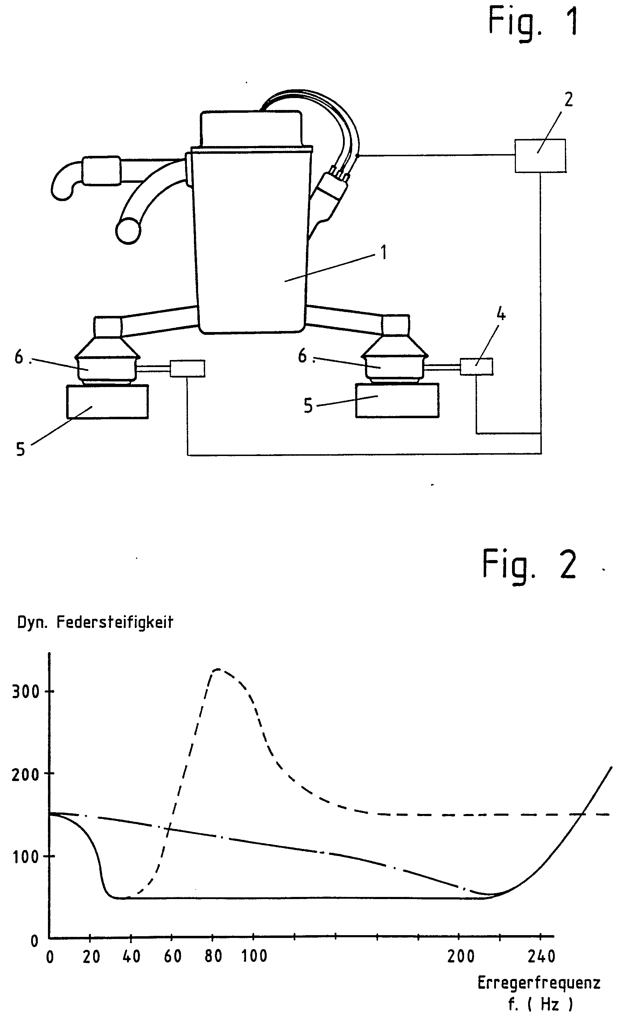

In Figur 1 ist in schematischer Darstellung ein Verbrennungsmotor 1 wiedergegeben, der auf zwei Motorlagern 6 der erfindungsgemäßen Art abgestützt ist. Diese ruhen ihrerseits auf Fundamenten 5, welche beispielsweise durch den Rahmen eines Kraftfahrzeuges gebildet werden können.

Die Motorlager 6 sind jeweils mit einer signalbetätigbaren Verstelleinrichtung 4 versehen, welche es erlaubt, die Öffnungsweite der enthaltenen Lochblende signalproportional zu verstellen.

Beide Verstelleinrichtungen 4 sind parallel zueinander und signalleitend mit dem Drehzahlaufnehmer 2 des Verbrennungsmotors verbunden. Letzterer ist mit einem Sensor versehen, der die Betriebsdrehzahl des Motors erfaßt, beispielsweise unter Ausnutzung des Zündsignals. Die Verstelleinrichtung 4 ist zweckmäßig mit einem elektrischen Servoantrieb versehen. Ein pneumatischer Antrieb ist jedoch ebenfalls möglich, beispielsweise unter Ausnutzung des betriebsbedingt im Ansaugrohr des Verbrennungsmotors entstehenden Unterdruckes.

Figur 2 zeigt in Diagramm, in welchem die dynamische Federsteifigkeit einer beispielhaften Ausführung des erfindungsgemäßen Motorlagers über der Errgerfrequenz des abgestützen Verbrennungsmotors aufgetragen ist.

Der sich ergebende Kurvenverlauf ist als durchgezogene Linie dargestellt. Zum Vergleich sind die sich ergebenden Linienzüge bei Verwendung einer Lochblende mit starr feststehender Öffnungsweite ebenfalls mit eingetragen. Die strichpunktierte Linie kennzeichnet dabei die dynamische Federsteifigkeit, die sich ergibt bei Verwendung einer Lochblende, deren Öffnungsweite ständig D max entspricht, die gestrichelte Linie die dynamische Federsteifigkeit, die sich während des gesamten Betriebes ergibt, wenn die Öffnungsweite starr dem Kleinstwert D min der erfindungsgemäßen Ausführung entspricht. Es ist deutlich zu erkennen, daß das erfindungsgemäße Motorlager, bei dem die Lochblende eine sich proportional zur Motordrehzahl ändernde Öffnungsweite aufweist, praktisch im gesamten Bereich der zu isolierenden Schwingungen eine um ca. 50 bis 80% reduzierte dynamische Federsteifigkeit aufweist, bezogen auf Ausführungen, bei denen die Öffnungsweite der Lochblende starr eingestellt ist. Motorerregte Schwingungen zwischen 30 und 200 Hz werden daher bei dem erfindungsgemäßen Motorlager wesentlich besser isoliert als bei bekannten Ausführungen.

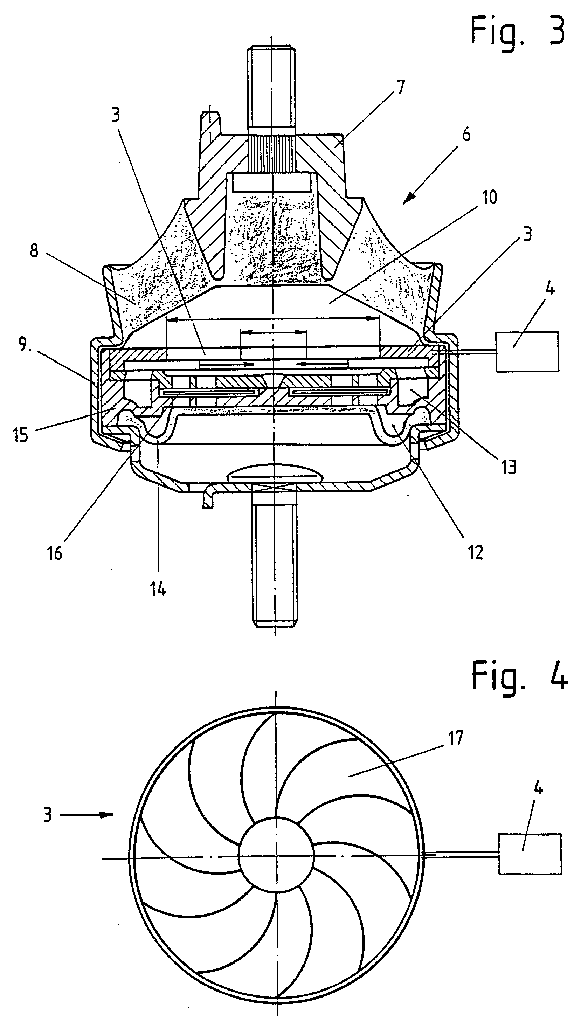

In Figur 3 ist eine beispielhafte Ausführung des erfindungsgemäßen Motorlagers in längsgeschnittener Darstellung wiedergegeben.

Das gezeigte Motorlager umfaßt das Auflager 7, welches durch ein hohlkegeliges Federelement 8 mit dem Traglager 9 verbunden ist. Sowohl das Auflager 7 als auch das Traglager 9 sind mit Gewindezapfen versehen, welche eine lösbare Festlegung angrenzender Maschinenteile ermöglichen, beispielsweise der Verbindungselemente eines Verbrennungsmotors und der Karosserie eines Kraftfahrzeuges.

Der Innenraum des Motorlagers 6 enthält einen Arbeitsraum 10 und einen Ausgleichsraum 12. Letzterer ist durch eine Pufferwand 14 nach unten abgeschlossen, welche im wesentlichen so ausgebildet ist, daß bei einer Einfederung des Auflagers 7 aus dem Arbeitsraum 10 verdrängtes Flüssigkeitsvolumen im wesentlichen drucklos in dem Ausgleichsraum 12 aufgenommen werden kann. Die dazu notwendige Verbindung zwischen dem Arbeitsraum 10 und dem Ausgleichsraum 12 besteht aus einem Kanal 13, der die Trennwand 15 im Bereich der Randzone spiralig durchdringt. Länge und Durchmesser des Kanals 13 sind so aufeinander abgestimmt, daß sich im Bereich der zu bedämpfenden Schwingungen zwischen 5 und 15 Hz eine hochgradige Dämpfung derselben ergibt.

Im Zentralbereich der Trennwand 15 ist die Kompensationswand 16 angeordnet. Diese ist parallel zur Richtung er eingeleiteten Schwingungen beweglich zwischen Anschlägen der Trennwand 15 und wird durch ein dünnes Plättchen aus Gummi gebildet. Sie ist in ihren Randbereichen nicht nennenswert umströmbar und dient der Isolierung hochfrequenter Schwingungen.

Auf der dem Arbeitsraum 10 zugewandten Seite ist der Kompensationswand 16 eine starr auf der Trennwand 15 abgestützte Lochblende 3 angeordnet, deren Öffnungsweite mittels einer signalbetätigbaren Verstelleinrichtung 4 zwischen dem Kleinstmaß D min und dem Größtmaß D max veränderbar ist. Der Zwischenraum zwischen der Lochblende 3 und der Trennwand 15 ist lediglich im Bereich der Kompensationswand 16 auf nachgiebige Weise begrenzt. Er wird außerhalb der Mündung des Kanals 13 und der Öffnung der Lochblende 3 durch starre und unnachgiebige Wandungen begrenzt.

Eine beispielhafte Ausführung einer Lochblende ist in Figur 4 wiedergegeben.

Sie ist als Irisblende gestaltet und weist dementsprechend eine größere Anzahl von gleichmäßig auf den Umfang verteilten Lamellen 17 auf, deren radial nach innen weisenden Enden durch gegenseitige Verdrehung von im Bereich des Außenumfanges angeordneten Ringen radial verschiebbar sind und es gestatten, die Öffnungsweite zu verstellen. Für eine Relativverdrehung der nicht gezeigten Ringe ist die Verstelleinrichtung 4 vorgesehen. Sie besteht aus einem elektromotorischen Antrieb, dessen Arbeitsglied mechanisch mit wenigstens einem der Ringe verbunden ist und es gestattet, diesen Ring relativ zu dem anderen Ring in Abhängigkeit von der Größe des Eingangssignals zu verdrehen. Zweckmäßig arbeitet der Motor gegen die Kraft einer Feder, welche bei der niedrigsten Motordrehzahl eine automatische Rückführung der Blendenöffnung auf das kleinste Öffnungsmaß bewirkt.

Es ist nicht notwendigerweise erforderlich, eine Irisblende als Lochblende zu verwenden, sondern gegebenenfalls auch möglich, abweichende Ausführungen. Eine Alternative besteht beispielsweise in der Verwendung von zwei aufeinanderliegenden Platten, die jeweils mit wenigstens einer Durchbrechung versehen sind, wobei die Durchbrechungen so bemessen und angeordnet sind, daß sie miteinander in Deckung und außer Deckung bringbar sind. Die sich ergebende Durchtrittsöffnung ist in diesen Fällen zumeist nicht kreisförmig begrenzt, was jedoch in Kauf genommen werden kann. Die tatsächliche Öffnungsweite wird in diesem Falle errechnet unter Zugrundelegung einer fiktiven Kreisfläche, deren Größe mit der tatsächlichen Größe der Durchtrittsöffnung identisch ist. Die grundsätzliche Festlegung D min und D max erfolgt ebenso wie vorstehend beschrieben, die Festlegung der Zwischenstellungen in Abhängigkeit von der Größe des Eingangssignals.

**Ansprüche**

1. Motorlager mit hydraulischer Dämpfung, enthaltend einen durch ein Auflager, eine Tragfeder, ein Traglager und eine Trennwand begrenzten Arbeitsraum und einen durch die Trennwand und eine nachgiebige Pufferwand begrenzten Ausgleichsraum, die durch eine Drosselöffnung verbunden und mit Flüssigkeit gefüllt sind, wobei die Trennwand in wenigstens einem Teilbereich eine parallel zur Richtung der eingeleiteten Schwingungen zwischen Anschlägen bewegliche Kompensationswand umfaßt und eine Lochblende zwischen der Kompensationswand und dem Arbeitsraum, dadurch gekennzeichnet, daß der Motor mit einem Drehzahlaufnehmer (2) zur Erzeugung eines drehzahlproportionalen Systems versehen ist, daß die Lochblende (3) mit einer signalbetätigbaren Verstelleinrichtung (4) zur signalproportionalen Veränderung der Öffnungsweite zwischen einem Kleinstmaß (D min) und einem Größtmaß (D max) versehen ist und daß der Drehzahlaufnehmer (2) und die Verstelleinrichtung (4) signalleitend verbunden sind.

2. Motorlager nach Anspruch 1, dadurch gekennzeichnet, daß die Lochblende (3) als Irisblende ausgebildet ist.

# Fig. 1

# Fig. 2

Dyn. Federsteifigkeit

Erregerfrequenz
f. ( Hz )

Fig. 3

Fig. 4